# EUROPEAN PATENT APPLICATION

(11) **EP 4 527 762 A1**
(43) Date of publication of application: **26.03.2025**
(21) Application number: 24195887.5
(22) Date of filing: 22.08.2024
(51) Int. Cl.: B65G 13/02, B65G 13/071

(54) **ZONE CONTROL SYSTEMS, CONVEYOR SYSTEMS, AND METHODS**

(30) Priority: 20.09.2023 US 202318470612
(71) Applicant: Intelligrated Headquarters LLC, Mason, OH 45040 (US)
(72) Inventor: IULIANO, Paolo, Charlotte, 28202 (US); JOHNSON, Sean, Charlotte, 28202 (US)
(74) Representative: Haseltine Lake Kempner LLP

(57) **Abstract**

Methods, systems, and/or the like are provided. In some embodiments, the zone control system comprises: a roller including: a drive portion; and a driven portion configured to be driven by the drive portion when the drive portion and the driven portion are operably engaged; a spring disposed between the drive portion and the driven portion, wherein the spring is configured to transition between an extended state, such that the drive portion and the driven portion are separated by a gap and refrain from operably engaging, and a compressed state, such that the drive portion and the driven portion are operably engaged; and an actuator operably engaged with one or more of the roller and the spring, wherein the actuator is configured to actuate the spring between the extended state and the compressed state.

## Description

### TECHNICAL FIELD

**.** The present disclosure relates generally to zone control systems. In particular, it relates to zone control systems for use in conveyor systems.

### BACKGROUND

**.** Conveyor systems may have multiple zones distributed throughout their belts for efficiently transporting goods. Zones may be selectively activated and deactivated as necessary to transport goods throughout the conveyor system. For example, a zone may be deactivated to allow goods to accumulate and, once a sufficient number of goods have accumulated, the zone may be reactivated to transfer the accumulated goods as a group, rather than transporting them piecemeal. Zones may be selectively activated and deactivated in a variety of ways, such as by controlling one or more rollers. Existing control methods are limited in load capacity and may also introduce new inefficiencies into the system.

**.** Through applied effort, ingenuity, and innovation, Applicant has solved problems relating to zone control systems by developing solutions embodied in the present disclosure, which are described in detail below.

### SUMMARY

**.** In general, embodiments of the present disclosure provide systems, methods, and/or the like.

**.** In accordance with various embodiments of the present disclosure, there is provided, a zone control system including a roller having a drive portion; and a driven portion configured to be driven by the drive portion when the drive portion and the driven portion are operably engaged; a spring disposed between the drive portion and the driven portion, wherein the spring is configured to transition between an extended state, such that the drive portion and the driven portion are separated by a gap and refrain from operably engaging, and a compressed state, such that the drive portion and the driven portion are operably engaged; and an actuator operably engaged with one or more of the roller and the spring, wherein the actuator is configured to actuate the spring between the extended state and the compressed state.

**.** In some embodiments, the zone control system further includes a bladder configured to transition between a filled state and an empty state, wherein the bladder is operably engaged with the actuator, wherein, when the bladder is in the filled state, the spring is compressed and the drive portion and driven portion are operably engaged, and, wherein, when the bladder is in the empty state, the spring is extended and the drive portion and the driven portion refrain from operably engaging.

**.** In some embodiments, the bladder is an air bladder, and wherein the zone control system further includes an air supply inlet fluidly connected to the air bladder and configured to provide an air supply to the air bladder.

**.** In some embodiments, the zone control system further includes a push knob, wherein the push knob is operably engaged with the bladder and the actuator, and wherein the push knob is configured to transfer one or more actuating forces between the bladder and the actuator.

**.** In some embodiments, the zone control system further includes a first friction plate bonded to the drive portion and a second friction plate bonded to the driven portion, wherein the first and second friction plates are connected.

**.** In some embodiments, the zone control system further includes one or more thrust washers operably engaged with the drive portion of the roller.

**.** In some embodiments, the actuator is an actuating bracket.

**.** In some embodiments, the zone control system further includes an axle, wherein the drive portion and the driven portion are aligned in parallel on or along the axle and configured to rotate on or along the axle.

**.** In some embodiments, the zone control system is fixedly attached to a conveyor frame of a conveyor system.

**.** In some embodiments, the zone control system is disposed on or along a curved portion of the conveyor system.

**.** In accordance with various embodiments, there is provided a conveyor system including a conveyor frame; one or more rollers disposed on or within the conveyor frame, wherein at least one of the rollers includes a drive portion; and a driven portion configured to be driven by the drive portion when the drive portion and the driven portion are operably engaged; a spring disposed between the drive portion and the driven portion, wherein the spring is configured to transition between an extended state, such that the drive portion and the driven portion are separated by a gap and refrain from operably engaging, and a compressed state, such that the drive portion and the driven portion are operably engaged; and an actuator operably engaged with one or more of the roller and the spring, wherein the actuator is configured to actuate the spring between the extended state and the compressed state.

**.** In some embodiments, the conveyor system further includes a bladder configured to transition between a filled state and an empty state, wherein the bladder is operably engaged with the actuator, wherein, when the bladder is in the filled state, the spring is compressed and the drive portion and driven portion are operably engaged, and, wherein, when the bladder is in the empty state, the spring is extended and the drive portion and the driven portion refrain from operably engaging.

**.** In some embodiments, the bladder is an air bladder, and wherein the zone control system further includes an air supply inlet fluidly connected to the air bladder and configured to provide an air supply to the air bladder.

**.** In some embodiments, the conveyor system further includes a push knob, wherein the push knob is operably engaged with the bladder and the actuator and configured to transfer one or more actuating forces between the bladder and the actuator.

**.** In some embodiments, the conveyor system further includes a first friction plate bonded to the drive portion and a second friction plate bonded to the driven portion, and wherein the first and second friction plates are connected.

**.** In some embodiments, the conveyor system further includes one or more thrust washers operably engaged with the drive portion of the roller.

**.** In some embodiments, the actuator includes an actuating bracket.

**.** In some embodiments, the conveyor system further includes an axle, wherein the drive portion and the driven portion are aligned in parallel on or along the axle and configured to rotate on or along the axle.

**.** In some embodiments, the conveyor frame includes one or more curved portions.

**.** According to various embodiments, there is provided a method of using a zone control system, the method including inflating, by an air supply inlet, an air bladder coupled to an actuating bracket, such that the actuating bracket compresses a spring separating a drive portion of a roller from a driven portion of the roller; engaging the drive portion and the driven portion such that the drive portion drives the driven portion of the roller; and deflating, by the air supply inlet, the air bladder, such that the actuating bracket extends a spring separating the drive portion of the roller from the driven portion of the roller.

**.** The above summary is provided merely for purposes of summarizing some example embodiments to provide a basic understanding of some embodiments of the disclosure. Accordingly, it will be appreciated that the above-described embodiments are merely examples. It will be appreciated that the scope of the disclosure encompasses many potential embodiments in addition to those here summarized, some of which will be further described below.

### BRIEF DESCRIPTION OF THE SEVERAL VIEWS OF THE DRAWING(S)

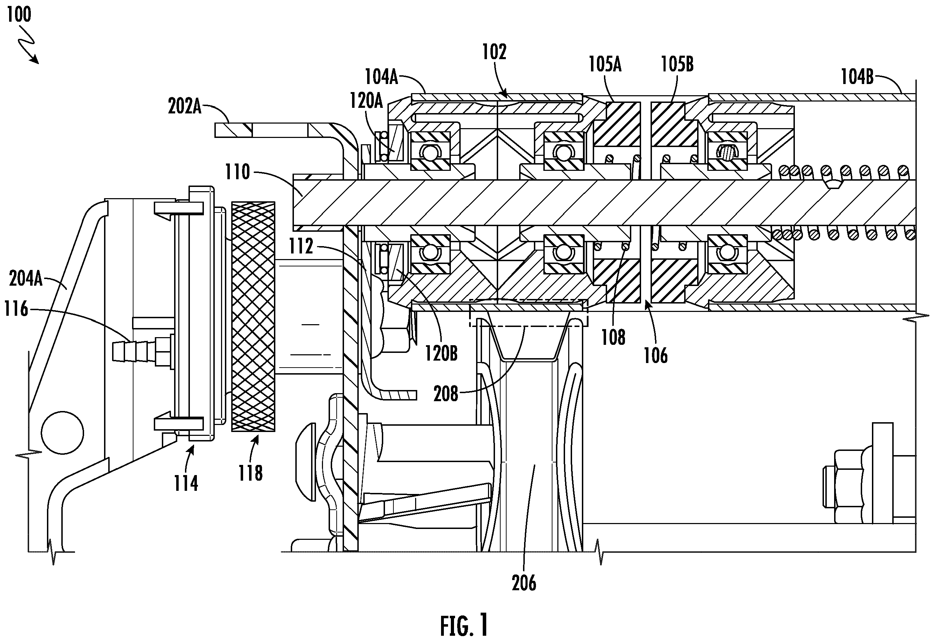

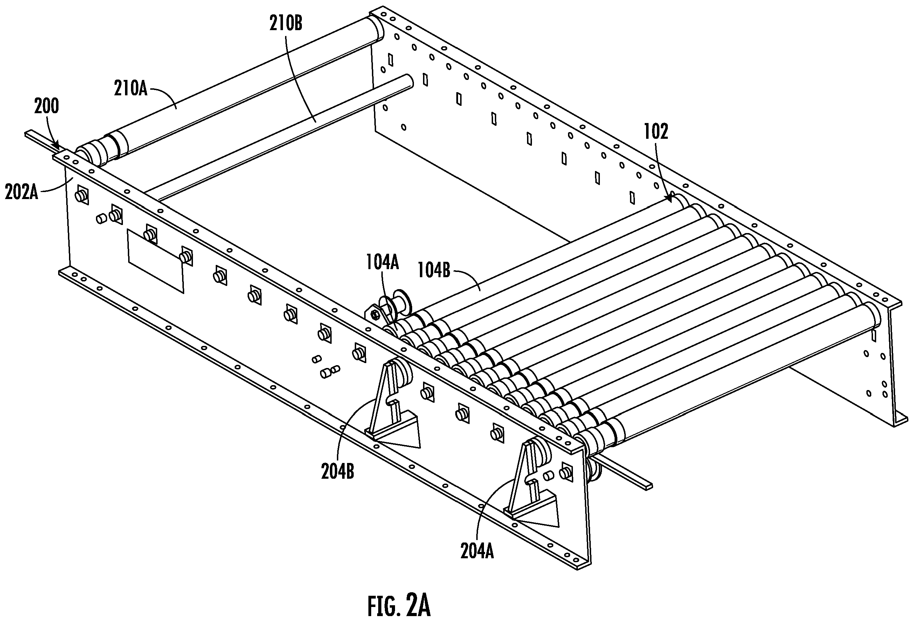

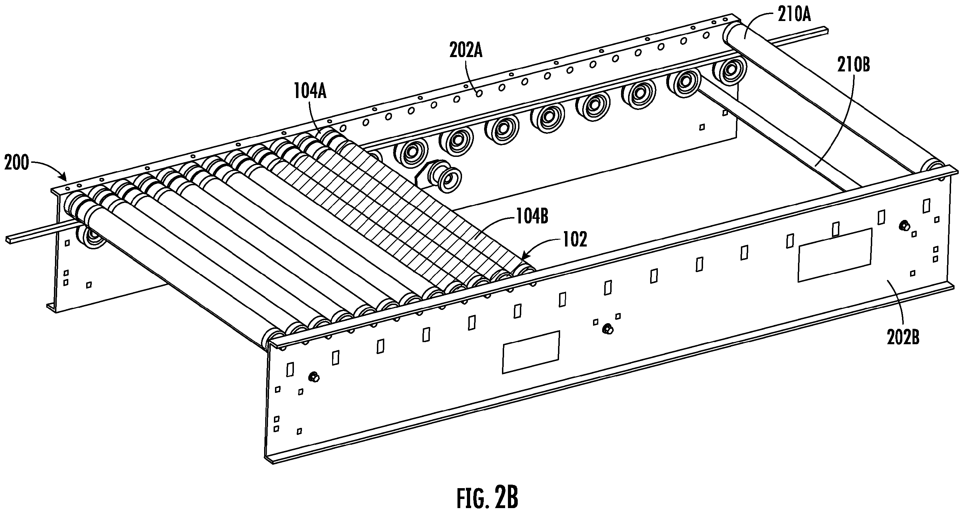

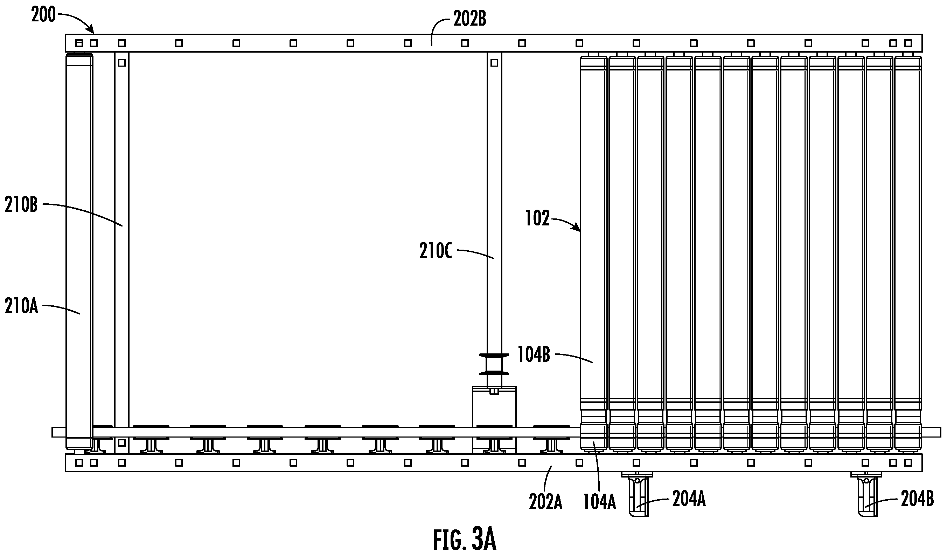

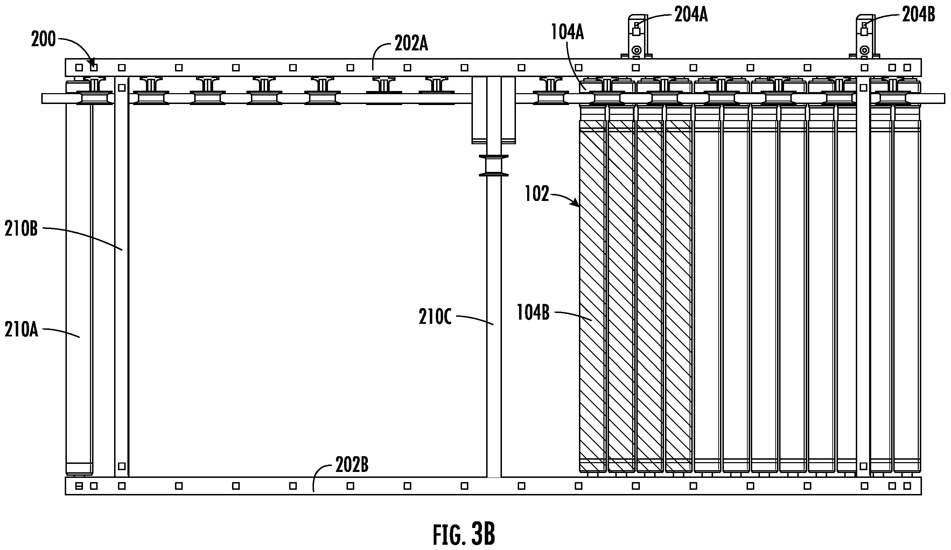

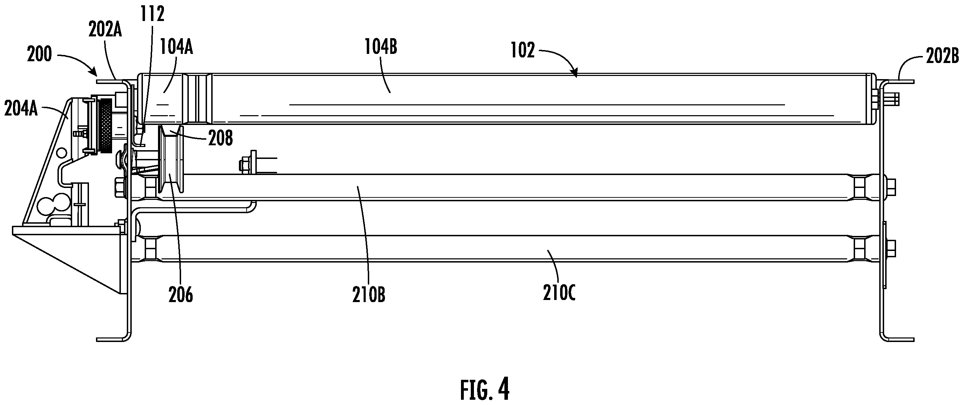

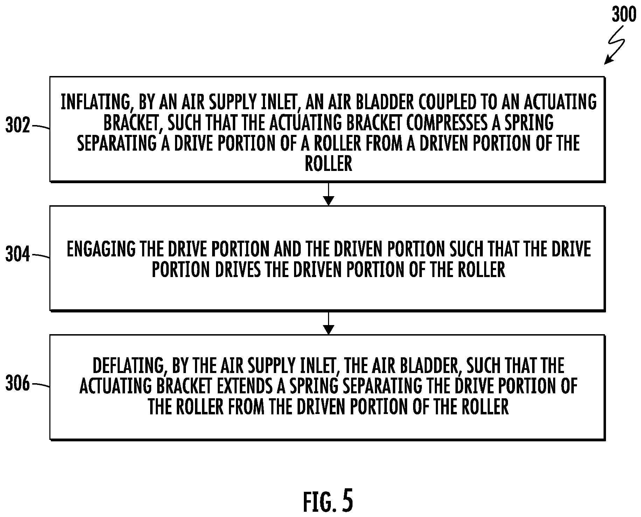

**.** Having thus described the disclosure in general terms, reference will now be made to the accompanying drawings, which are not necessarily drawn to scale, and wherein:
**.** FIG. 1 shows a side, cross-sectional view of an example zone control system in accordance with various embodiments of the present disclosure;
**.** FIGS. 2A and 2B show isometric view of an example conveyor system with a zone control system installed in accordance with various embodiments of the present disclosure;
**.** FIGS. 3A and 3B show top plan and bottom plan views, respectively, of an example conveyor system with a zone control system installed in accordance with various embodiments of the present disclosure;
**.** FIG. 4 shows an elevated front view of an example conveyor system with a zone control system installed in accordance with various embodiments of the present disclosure; and
**.** FIG. 5 is a flow chart illustrating an example method of using an example conveyor system in accordance with various embodiments of the present disclosure.

### DETAILED DESCRIPTION OF SOME EXAMPLE EMBODIMENTS

**.** Various embodiments of the present disclosure now will be described more fully hereinafter with reference to the accompanying drawings, in which some, but not all embodiments of the disclosure are shown. Indeed, this disclosure may be embodied in many different forms and should not be construed as limited to the embodiments set forth herein; rather, these embodiments are provided so that this disclosure will satisfy applicable legal requirements. The term "or" (also designated as "/") is used herein in both the alternative and conjunctive sense, unless otherwise indicated. The terms "illustrative" and "exemplary" are used to be examples with no indication of quality level. Like numbers may refer to like elements throughout. The phrases "in one embodiment," "according to one embodiment," and/or the like generally mean that the particular feature, structure, or characteristic following the phrase may be included in at least one embodiment of the present disclosure and may be included in more than one embodiment of the present disclosure (importantly, such phrases do not necessarily may refer to the same embodiment).

### Overview

**.** According to various embodiments, a zone control system may include a roller having a first, drive portion and a second, driven portion. The drive portion may be connected to and configured to drive the conveyor belt in addition to the driven portion when the drive portion and the driven portion are connected.

**.** In some embodiments, there may be a gap defined between the drive portion and the driven portion; the gap may prevent the drive portion from being connected to the driven portion, thereby preventing the drive portion from driving the driven portion, and the gap may be created and/or maintained by a spring. In some embodiments, the zone control system may include an actuator (powered, for example, by compressed air) that may compress the spring, narrowing the gap such that the drive portion contacts and drives the driven portion.

### Example Zone Control Systems

**.** FIG. 1 shows a side cross-sectional view of an example zone control system 100 in accordance with various embodiments of the present disclosure. In some embodiments, the zone control system 100 may include a roller 102. In some embodiments, the roller 102 may include a drive portion 104A and a driven portion 104B. The drive portion 104A may be connected to a drive mechanism, which may be configured to drive the drive portion 104A. The driven portion 104B may refrain from moving unless brought into contact with the drive portion 104A. That is, when the drive portion 104A and the driven portion 104B of the roller 102 are separated, only the drive portion 104A may rotate, according to some embodiments. In some embodiments, there may be a gap 106 defined between the drive portion 104A and the driven portion 104B. The gap 106 may be maintained by a spring 108, which may be disposed between the drive portion 104A and the driven portion 104B. As will be described later in this disclosure, the gap 106 and spring 108 may be controlled to affect a connection between the drive portion 104A and the driven portion 104B.

**.** In some embodiments, the zone control system may include a first friction plate 105A and a second friction plate 105B. The first and second friction plates 105A-B may be disposed on top of and/or integrated with the roller 102. In some embodiments, the first friction plate 105A may be disposed proximate to or flush with the drive portion 104A and the second friction plate 105B may be disposed proximate to or flush with the driven portion 104B.

**.** In some embodiments, the zone control system 100 may include an axle 110. The axle 110 may be aligned along the roller 102 such that the roller 102 rotates around the axle 110. The axle 110 may be disposed through a center of the roller 102. In some embodiments, the drive portion 104A and the driven portion 104B may be configured to rotate around the axle 110 when the drive portion 104A and the driven portion 104B are connected.

**.** In some embodiments, the zone control system 100 may include an actuator 112. In some embodiments, the actuator 112 may be an actuating bracket. The actuator 112 may be disposed proximate to the roller 102 and operably engaged with the drive portion 104A of the roller 102. The actuator 112 may be configured to bring the drive portion 104A and the driven portion 104B into contact with each other such that the drive portion 104A drives the driven portion 104B.

**.** In some embodiments, the zone control system 100 may include one or more thrust washers 120A, 120B. The thrust washers 120A, 120B may be disposed between the roller 102 and the actuator 112. Thrust washers 120A, 120B may be used elsewhere in the zone control system 100 to provide spacing and/or load control for various components of the zone control system 100.

**.** In some embodiments, the zone control system 100 may include a push knob 118. In some embodiments, the push knob 118 may be disposed between the bladder 114 and the actuator 112. In some embodiments, when the bladder 114 increases in size, the bladder 114 may apply one or more forces to the push knob 118, which may transfer those one or more forces to the actuator 112. In at least this way, the actuator 112 may bring the drive portion 104A and the driven portion 104B into contact with each other.

**.** In some embodiments, the zone control system 100 may include a bladder 114. The bladder 114 may expand or compress in size, transitioning between a filled (expanded) state and an empty (compressed) state. In some embodiments, the bladder 114 may be an air bladder configured to be filled to an expanded state (i.e., inflated) when it receives air from an air supply inlet 116, which may be fluidly connected to the bladder 114; the bladder 114 may also be emptied to a compressed (i.e., deflated) state. The air supply inlet 116 may be selectively opened and closed to allow air (or other fluids) into and out of the bladder 114. In some embodiments, the zone control system 100 may include one or more valves, which may be exhaust valves that vent out to the atmosphere. In some embodiments, if the conveyor system 100 loses power, then the one or more valves may default to an exhaust state.

**.** In some embodiments, the bladder 114 may be operably engaged with the actuator 112 such that when the bladder 114 expands (inflates), the bladder 114 causes the actuator 112 to bring the drive portion 104A and the driven portion 104B into contact with each other (compressing the spring 108 and shrinking the gap 106) such that the drive portion 104A drives the driven portion 104B. The bladder 114 may similarly be operably engaged with the actuator 112 such that when the bladder 114 compresses (deflates), the bladder 114 causes the actuator 112 to separate the drive portion 104A from the driven portion 104B, refraining them from contacting each other (extending the spring 108 and expanding the gap 106) such that the drive portion 104A refrains from driving the driven portion 104B.

**.** In some embodiments, and as shown in at least FIGS. 2A-2B, 3A-3B, and 4, the zone control system 100 may be operatively engaged with and/or installed within a conveyor system 200. In some embodiments, the conveyor system 200 may include one or more frame rails 202A, 202B. The one or more frame rails 202A, 202B may be disposed proximate to the actuator 112. In some embodiments, the push knob 118 may be disposed through the one or more frame rails 202A, 202B. In some embodiments, the one or more frame rails 202A, 202B may be curved.

**.** In some embodiments, the conveyor system 200 may include one or more support beams 204A, 204B. The one or more support beams 204A, 204B may be operably engaged to one or more components of the zone control system 100 and configured to provide additional support to the zone control system 100 when it is attached to the conveyor system 200.

**.** In some embodiments, the zone control system 100 may be attached to the frame rails 202A, 202B. As shown in FIGS. 2A-2B and 3A-3B, multiple zone control systems 100 with multiple rollers 102 may be fixedly attached to the frame rails 202A, 202B.

**.** As shown in FIG. 4, and as previously mentioned, the conveyor system 200 may include a drive mechanism 206. The drive mechanism may be operably engaged with the drive portion 104A of the roller 102. In some embodiments, the conveyor system 200 may include a belt (such as a V-belt) 208 configured to operably connect the drive portion 104A with the drive mechanism 206.

**.** It will be understood that some components and/or features of the zone control system 100 and/or the conveyor system 200 may be omitted to highlight features of the disclosure, but that will be understood by those skilled in the art. For example, in FIGS 2A-4, it will be understood that the conveyor system 200 may include the belt 208, such as a V-belt, for alignment purposes. In some embodiments, the belt 208 may be configured to drive one or more rollers (e.g., the drive portion 104 of the roller 102). In some embodiments, the conveyor system 200 may include one or more support rollers configured to support the belt 208 during the belt's 208 return.

**.** According to various embodiments, and as shown in at least FIGS. 2A-2B, 3A-3B, and 4, the conveyor system 200 may include one or more additional rollers 210A, 210B, 210C may be operably engaged with the one or more rollers 102 and/or the zone control system 100. It will be understood that some of the rollers 102 have been removed from the conveyor system 200 for the purpose of visualization only.

### Example Methods of Using Zone Control Systems

**.** Referring now to FIG. 5, according to various embodiments, there is provided a method 300 of using a zone control system. The method 300 is described with respect to the zone control system 100, the conveyor system 200, and their various components. It will be understood that the method 300 may be implemented using a variety of systems and components, as desired.

**.** In some embodiments, the method 300 may include a step 302 of inflating, by an air supply inlet, an air bladder coupled to an actuating bracket, such that the actuating bracket compresses a spring separating a drive portion of a roller from a driven portion of the roller.

**.** In some embodiments, the method 300 may include a step 304 of engaging the drive portion and the driven portion such that the drive portion drives the driven portion of the roller.

**.** In some embodiments, the method 300 may include a step 306 of deflating, by the air supply inlet, the air bladder such that the actuating bracket extends a spring separating the drive portion of the roller from the driven portion of the roller.

**.** Many modifications and other embodiments of the disclosure set forth herein will come to mind to one skilled in the art to which this disclosure pertains having the benefit of the teachings presented in the foregoing descriptions and the associated drawings. Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A zone control system comprising:
a roller comprising:
a drive portion; and
a driven portion configured to be driven by the drive portion when the drive portion and the driven portion are operably engaged;
a spring disposed between the drive portion and the driven portion, wherein the spring is configured to transition between an extended state, such that the drive portion and the driven portion are separated by a gap and refrain from operably engaging, and a compressed state, such that the drive portion and the driven portion are operably engaged; and
an actuator operably engaged with one or more of the roller and the spring, wherein the actuator is configured to actuate the spring between the extended state and the compressed state.

2. The zone control system of claim 1, further comprising a bladder configured to transition between a filled state and an empty state, wherein the bladder is operably engaged with the actuator, wherein, when the bladder is in the filled state, the spring is compressed and the drive portion and driven portion are operably engaged, and, wherein, when the bladder is in the empty state, the spring is extended and the drive portion and the driven portion refrain from operably engaging.

3. The zone control system of claim 2, wherein the bladder is an air bladder, and wherein the zone control system further comprises an air supply inlet fluidly connected to the air bladder and configured to provide an air supply to the air bladder.

4. The zone control system of claim 3, further comprising a push knob, wherein the push knob is operably engaged with the bladder and the actuator, and wherein the push knob is configured to transfer one or more actuating forces between the bladder and the actuator.

5. The zone control system of claim 1, further comprising a first friction plate bonded to the drive portion and a second friction plate bonded to the driven portion, wherein the first and second friction plates are connected.

6. The zone control system of claim 1, further comprising one or more thrust washers operably engaged with the drive portion of the roller.

7. The zone control system of claim 1, wherein the actuator comprises an actuating bracket.

8. The zone control system of claim 1, further comprising an axle, wherein the drive portion and the driven portion are aligned in parallel on or along the axle and configured to rotate on or along the axle.

9. The zone control system of claim 1, wherein the zone control system is fixedly attached to a conveyor frame of a conveyor system.

10. The zone control system of claim 9, wherein the zone control system is disposed on or along a curved portion of the conveyor system.
